# EUROPEAN PATENT SPECIFICATION

(11) **EP 4 263 876 B1**
(45) Date of publication and mention of the grant of the patent: **18.12.2024**
(21) Application number: 21809907.5
(22) Date of filing: 18.10.2021
(51) Int. Cl.: C14B 11/00, A43D 8/42, A43D 95/06, D06B 1/14, H02K 49/10, H02K 51/00

(54) **ANGLED MAGNETIC COUPLING**
ABGEWINKELTE MAGNETKUPPLUNG
COUPLAGE MAGNÉTIQUE INCLINÉ

(30) Priority: 18.12.2020 BG 520020
(43) Date of publication of application: 25.10.2023
(73) Proprietor: PL Project Ltd., 6400 Dimitrovgrad (BG)
(72) Inventor: TZONEV, Plamen Dimitrov, Sofia 1434 (BG); BORISOV, Lyubomir Todorov, Gabrovo 5300 (BG); ROYDEV, Miroslav Dinchev, Galabovo 6285 (BG); VELEV, Goran Valchev, Shumen 9705 (BG)
(74) Representative: Benatov, Samuil Gabriel
(86) International application number: PCT/BG2021/000026
(87) International publication number: WO 2022/126208

(56) References cited:
- WO-A1-2018/129597
- CN-A- 109 687 685
- DE-A1- 2 946 340
- JP-B2- 3 463 700

## Description

### Technical Field

The present invention relates to an angled magnetic coupling, which is applicable in apparatuses and devices used in the haberdashery-leather industry, instrument engineering, mechanical engineering, chemical industry.

### Background of the Invention

A great number of patent publications are known, in which magnetic couplings with different constructions are described. For example, WO 2018/129597 published on 19.07.2018 describes a magnetic coupling built in an apparatus for dyeing edges of leather pieces comprising magnets for a dyeing shaft (driven mechanism) being arranged radially and incorporated in a holder, which is attached to the dyeing shaft axis, and magnets for the motor (drive mechanism) also being arranged radially and incorporated in a second holder, which is attached to the motor axis. Both holders have a common axis and an equal number of magnets arranged one above the other. The described magnetic coupling cannot be used for transmitting torque towards an axis of a driven mechanism arranged at an angle in relation to the axis of the drive mechanism.

JP3463700B2 discloses a magnetic coupling device that magnetically couples a drive shaft and a driven shaft to transmit torque, said shafts being coaxially connected. On the opposite surfaces of both shafts are provided permanent magnets. The arrangement of the magnets is such that the magnetic pole pattern arranged in the circumferential direction of the two shafts forms regions with different polarities, said regions having different length, because of the non-sequential arrangement of magnets of different polarities. The shaft has either equal sized radial segment with the same polarity alternating around a region of their circumferences, followed by a region with a different number of radial segments with opposite polarity, or different sized radial segments with opposite polarity alternating around their circumferences. In both embodiments JP3463700B2 discloses shafts with different sized areas of magnets with opposite polarities, which cannot be used as efficient angled magnetic coupling, because when rotating one of the shafts, there will not be created effective torque providing the same rotation to the second shaft, because the existence of the different sized regions with opposite polarities. The second shaft will have some delay of rotation in some points of rotation, and short pulses will be created to rotate it when a small magnet region with opposite polarity from the first shaft comes into contact with the second shaft, thus creating pulsating rotation of the second shaft, and it is very likely the second shaft to wabble at some point.

### Disclosure of the Invention

An object of the present invention is to provide an angled magnetic coupling, which ensures transmitting a torque towards an axis of a driven mechanism arranged at an angle in relation to an axis of a drive mechanism

An angled magnetic coupling comprising magnets for a drive mechanism and magnets for a driven mechanism, said magnets have identical diameter and are attached to holders. According to the present invention, said magnets for drive mechanism and said magnets for driven mechanism are two composite cylindrical magnets, whose axes are arranged at an angle of 90 to 270 degrees relative to each other, wherein each of said two composite cylindrical magnets is composed of two pairs of equal sized segmental magnets, and each of said four segmental magnets is a diametrically polarized radial segment of said cylinder, wherein the segmental magnets of each pair are arranged opposite each other having the same polarity at the inner and outer sides of the segment, further, the segmental magnets of one pair have an opposite polarity in relation to the segmental magnets of the other pair so as the radial segments with opposite polarity are alternating around the circumference of said composite cylindrical magnets.

The angled magnetic coupling according to the present invention provides contact-free transmission of a torque towards an axis of a driven mechanism arranged at an angle of 90 to 270 degrees in relation to the axis of a drive mechanism. Said angled magnetic coupling is suitable for use in devices operating with highly aggressive medium, which are not able to be lubricated or where a contact between the drive and the driven axis is not permitted. It may be used in devices in which both rotation axes are arranged at an angle relative to each other and said devises are located in physically separated spaces, whereby the contact between the axes of the driven mechanism and the drive mechanism is impossible.

### Brief Description of Drawings

FIG. 1 is a perspective view of segmental magnets, of which a composite cylindrical magnet is composed;
FIG. 2 is a perspective view of a composite cylindrical magnet;
FIG. 3 is a perspective view of an angled magnetic coupling;
FIG. 4.1 - FIG. 4.5 are perspective views of angled magnetic couplings, wherein the axes of the composite cylindrical magnets are arranged at different angles of 90 to 270 degrees.
FIG. 5 is a front view with a partial section of an angled magnetic coupling built into a horizontal dyeing head for leather pieces, wherein the axes of the composite cylindrical magnets are arranged at an angle of 94 degrees relative to each other.

### Modes for Carrying Out the Invention

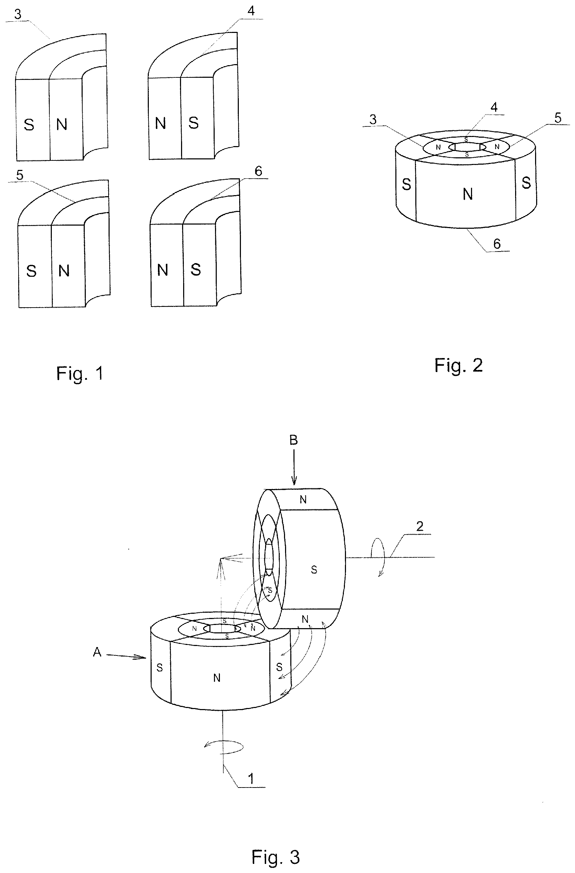

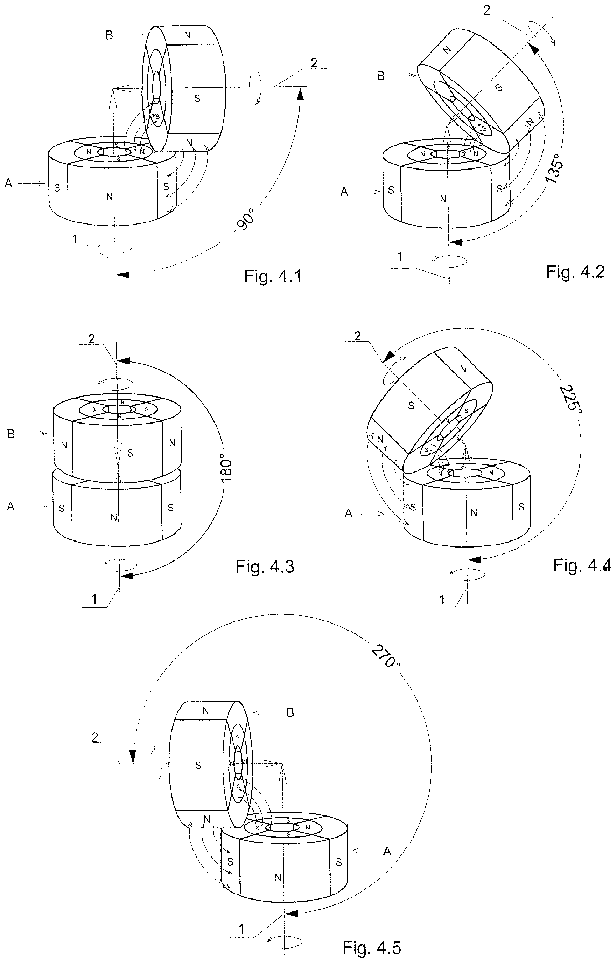

Referring to FIG. 1 - FIG. 4.5, an angled magnetic coupling shown consists of two composite cylindrical magnets "A" and "B" having equal diameter, whose axes 1 and 2, respectively, are arranged at an angle of 90° (FIG.4.1), 135⁰ (FIG.4.2), 180⁰ (FIG. 4.3), 225⁰ (FIG. 4.4) and 270⁰ (FIG. 4.5).

Each of said composite cylindrical magnets is composed of two pairs of segmental magnets 3, 5 and 4, 6 (FIG. 1, FIG 2) and each of said segmental magnets 3, 4, 5, 6 is a diametrically polarized segment, whereby the inner side (with the smaller diameter) of one pair of segmental magnets 3, 5 is a north magnetic pole "N", while the outer side (with the larger diameter) is a south magnetic pole "S". The other pair of segments (4, 6) is polarized in the opposite diametrical direction - the inner side (with the smaller diameter) is a south magnetic pole "S" and the outer side (with the larger diameter) is a north magnetic pole "N". The segmental magnets of each pair 3, 5 and 4, 6 are located opposite (radial) to each other in the composite cylindrical magnets "A" and "B" and are with the same polarity at the inner side and outer side, whereby the segmental magnets of one pair 3,5 have the opposite polarity in relation to the segmental magnets of the other pair 4, 6.

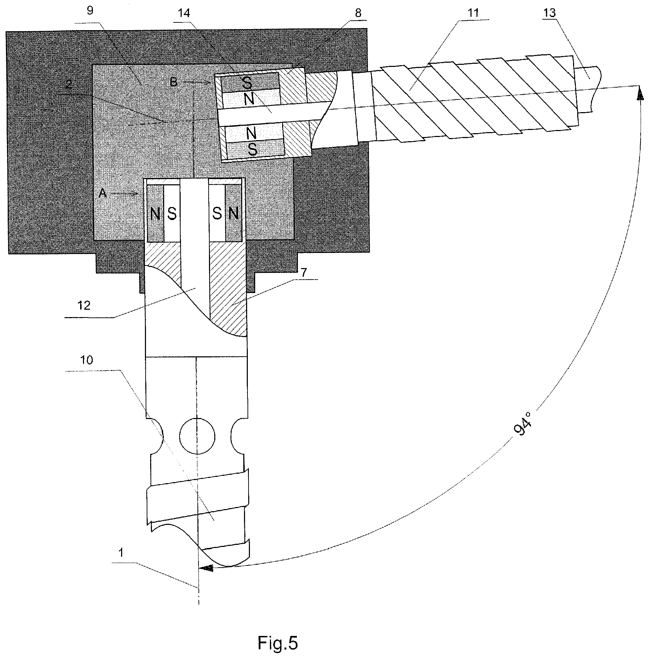

Each of said composite cylindrical magnets "A" and "B" is attached to a first holder 7 and second 8, respectively (see FIG.5).

Referring to FIG. 5, an angled magnetic coupling according to the present invention is built in a horizontal dyeing head for leather pieces and leather articles. The composite cylindrical magnets "A" and "B" have equal diameter and the construction described above.

The first axis 1 and the second axis 2 of the composite cylindrical magnets "A" and "B", respectively, are arranged at an angle of 94 degrees relative to each other, further, the first axis 1 of the cylindrical magnet "A" is arranged vertically to the horizon and said first axes 1 is a common axis for the composite cylindrical magnet "A" and a delivery screw pump 10. Said angled magnetic coupling is located in a plenum 9, whereby the first holder 7 of the cylindrical magnet "A" is attached to the upper end of the delivery screw pump 10 through a guide bearing (not shown), in said guide bearing a central channel 11 and radial openings (not shown) are provided. Said second axes 2 is a common axis for the composite cylindrical magnet "B" and for a suction screw pump 12. The second holder 8 of the cylindrical magnet "B" is attached to an end of a suction screw pump 12 and to a horizontal dyeing shaft 13 accommodated therein. A horizontal channel 14 is formed along the axis 2 and along the entire length of said horizontal dyeing shaft 13 for discharging dye from the plenum 9 to the end of the horizontal channel 14.

The principle of operation of the angled magnetic coupling according to the present invention is as follows:
The axis 1 and the axis 2 of the cylindrical magnets "A" and "B", respectively, are fixed so that rotation only about the own axis is possible. To close the lines of force in the shortest way, said cylindrical magnets "A" and "B" (composed of segmental magnets 3, 5 and 4, 6, respectively) rotate relative to each other until they are in a stable position with one of their opposite poles. The cylindrical magnets "A" and "B" remain in this equilibrium position until they are brought out of this state by the rotation of one of said two magnets "A" and "B". The magnetic field of the two nearest segmental magnets of the cylindrical magnet "A" and the cylindrical magnet "B" is closed through the south (positive) magnetic pole "S" of the magnetic segment of the cylindrical magnet "A", the north (negative) magnetic pole "N" of the magnetic segment of the cylindrical magnet "B", the south (positive) magnetic pole "S" of the magnetic segment of the cylindrical magnet "B" and the north (negative) magnetic pole "N" of the magnetic segment of the cylindrical magnet "A". In an equilibrium state, the force of attraction has its maximum (absolute values of the force of attraction depend on the distances between the cylindrical magnets, however, in case of a fixed distance, said force of attraction has the maximum value for this distance).

Rotation of the cylindrical magnet "A" about the axis 1 counterclockwise (see figure 3) causes the lines of force of the magnetic field to be stretched, which forces the cylindrical magnet "B" to rotate about the axis 2 in such a direction as to recover again the equilibrium state, i.e. the cylindrical magnet "B" seeks to catch up with the rotation of the cylindrical magnet "A", and this rotation will continue until the cylindrical magnet "A" rotates to 45 degrees from the initial (equilibrium) state. When rotating more than 45 degrees, the two magnetically coupled segments of said magnet "A" and said magnet "B" will begin to move away from each other due to the rotation of the cylindrical magnets "A" and "B" about the axes 1 and 2 and the magnetic bond between them will weaken. Meanwhile, when rotating to more than 45 degrees, the next pair of magnetic segments of said cylindrical magnets "A" and "B" will take the place of the moving away magnetic segments and the cycle will be repeated in the next 90 degrees of rotation of the cylindrical magnet "A" about the axis 1. As a result of the rotation about the axis 1 of the cylindrical magnet "A" at a certain angle, rotation around the axis 2 of the cylindrical magnet "B" at the same angle also takes place. If the rotation of the cylindrical magnet "A" is continuous, then the cylindrical magnet "B" will rotate continuously at the same speed. In this way, a transmission of rotation of mutually perpendicular axes is realized.

The described system for transmitting rotation works quite effectively and at all angles between the axis 1 and 2 from 90 to 270 degrees. The difference that will occur at different angles between axes 1 and 2 is in the different torque that the angular magnetic coupling has at different angles from 90 to 270 degrees.

Referring now to FIG. 5, the angled magnetic coupling built in a horizontal dyeing head for leather pieces and leather articles is shown. When the delivery screw pump 10 is rotated, dye is sucked-in from a dye container through the radial openings, which connect the increased pressure area of the delivery screw pump 10 to the central channel 12. Thus, the dye delivered by the delivery screw pump 10 is raised along the central channel 12, passing through the centre of the guide bearing (not shown), poured into the plenum 9, and from there, by means of the angled magnetic coupling, the dye is changed its direction of movement and is entered the horizontal channel 14 of the horizontal dyeing shaft 13. The dye is exited from the horizontal channel 14 and is run down the horizontal dyeing shaft 13, due to the inclination of 4 degrees. The desired layer of dye is formed on the outer dyeing surface of the horizontal dyeing shaft 13, and when the leather piece is touched the dyeing shaft 7, the layer of dye on the dyeing shaft 13 is transferred onto the leather piece due to the adhesion.

The horizontal portion of the dyeing head, being the working tool of the angled magnetic coupling, may be easy replaced with another one loaded with another colour without interrupting the technological process. If necessary, the dyeing head used may be cleaned easily, but may be placed on a support station, which prevents it from drying, and may be repositioned if the same colour has to be used again.

The angled magnetic coupling according to the present invention is used in apparatuses and devices, where it is necessary to change the angle of rotation for transmitting torque to an axis arranged at an angle in relation to the axis of a drive mechanism.

Other applications in which the angled magnetic coupling can be used is to provide contactless transmission of rotation at an angle of 90-270 degrees for devices operating with highly aggressive environments, for example, lubrication is not possible or contact between the two axes is not allowed for reasons related to the power supply to the device. The angular magnetic coupling according to the present invention can also be used in devices in which the two axes of rotation must be located in physically separated spaces, in which case the contact between axis 1 of a drive mechanism and axis 2 of a driven mechanism is impossible.

## Claims

1. An angled magnetic coupling comprising magnets (A) for a drive mechanism and magnets (B) for a driven mechanism, said magnets (A, B) have identical diameter and are attached to holders (7, 8), said magnets (A) for drive mechanism and said magnets (B) for driven mechanism are two composite cylindrical magnets (A, B), the axes of the two composite cylindrical magnets (A, B) are arranged at an angle of 90 to 270 degrees relative to each other, **characterized in that** each of said two composite cylindrical magnets (A, B) is composed of two pairs of equal sized segmental magnets (3, 5 and 4, 6) and each of said four segmental magnets (3, 4, 5, 6) is a diametrically polarized radial segment of said cylinder, wherein the segmental magnets of each pair (3, 5 and 4, 6) are arranged opposite each other in said composite cylindrical magnets (A, B) and have the same polarity at the inner and outer sides of the segment, further, the segmental magnets of one pair (3, 5) have an opposite polarity in relation to the segmental magnets of the other pair (4, 6) so as the radial segments with opposite polarity are alternating around the circumference of said composite cylindrical magnets (A, B).

## Patentansprüche

1. Eine abgewinkelte Magnetkupplung, die Magnete (A) für einen Antriebsmechanismus und Magnete (B) für einen angetriebenen Mechanismus umfasst, wobei die Magnete (A, B) einen identischen Durchmesser aufweisen und an Haltern (7, 8) befestigt sind, wobei die benannten Magnete (A) für den Antriebsmechanismus und die benannten Magnete (B) für den angetriebenen Mechanismus zwei zylindrische Kompositmagnete (A, B) sind, wobei die Achsen der beiden zylindrischen Kompositmagnete (A, B) in einem Winkel von 90 bis 270 Grad zueinander angeordnet sind, **dadurch gekennzeichnet, dass** jeder der benannten beiden zylindrischen Kompositmagnete (A, B) aus zwei Paaren gleich großer Segmentmagnete (3, 5 und 4, 6) besteht und jeder der benannten vier Segmentmagnete (3, 4, 5, 6) ein diametral polarisiertes radiales Segment des benannten Zylinders ist, wobei die Segmentmagnete jedes Paars (3, 5 und 4, 6) in den benannten zylindrischen Kompositmagnete (A, B) einander gegenüberliegend angeordnet sind, und an der Innen- und Außenseite des Segments die gleiche Polarität haben, wobei weiterhin die Segmentmagnete eines Paares (3, 5) eine entgegengesetzte Polarität in Bezug auf die Segmentmagnete des anderen Paares (4, 6) haben, so dass die radialen Segmente mit entgegengesetzter Polarität abwechselnd um den Kreisumfang der zylindrischen Kompositmagnete (A, B) angeordnet sind.

## Revendications

1. Accouplement magnétique coudé comprenant des aimants (A) pour un mécanisme d'entraînement et des aimants (B) pour un mécanisme entraîné, lesdits aimants (A, B) ayant un diamètre identique et étant fixés sur des supports (7, 8), lesdits aimants (A) pour mécanisme d'entraînement et lesdits aimants (B) pour mécanisme entraîné étant deux aimants cylindriques composites (A, B), les axes des deux aimants cylindriques composites (A, B) étant disposés selon un angle de 90 à 270 degrés l'un par rapport à l'autre, **caractérisé en ce que** chacun desdits deux aimants cylindriques composites (A, B) est composé de deux paires d'aimants segmentaires de taille égale (3, 5 et 4, 6) et chacun desdits quatre aimants segmentaires (3 , 4, 5, 6) est un segment radial diamétralement polarisé dudit cylindre, dans lequel les aimants segmentaires de chaque paire (3, 5 et 4, 6) sont disposés à l'opposé l'un de l'autre dans lesdits aimants cylindrique composites (A, B) et ont la même polarité sur les côtés intérieur et extérieur du segment, en outre, les aimants segmentaires d'une paire (3, 5) ont une polarité opposée par rapport aux aimants segmentaires de l'autre paire (4 , 6) de telle sorte que les segments radiaux de polarité opposée alternent autour de la circonférence desdits aimants cylindriques composites (A, B).
